# EUROPÄISCHE PATENTSCHRIFT

(11) **EP 2 132 456 B1**
(45) Veröffentlichungstag und Bekanntmachung des Hinweises auf die Patenterteilung: **05.06.2013**
(21) Anmeldenummer: 08717492.6
(22) Anmeldetag: 07.03.2008
(51) Int. Cl.: F16F 13/08, F16F 13/20

(54) **PNEUMATISCH DÄMPFENDES LAGER**
PNEUMATICALLY DAMPING BEARING
SUPPORT À AMORTISSEMENT PNEUMATIQUE

(30) Priorität: 12.03.2007 DE 102007012158
(43) Veröffentlichungstag der Anmeldung: 16.12.2009
(73) Patentinhaber: Trelleborg Automotive Germany GmbH, 64747 Breuberg (DE)
(72) Erfinder: HOFMANN, Manfred, 65597 Hünfelden (DE); GRAEVE, Arndt, 56072 Koblenz (DE)
(74) Vertreter: Preissner, Nicolaus
(86) Internationale Anmeldenummer: PCT/EP2008/052745
(87) Internationale Veröffentlichungsnummer: WO 2008/110506

(56) Entgegenhaltungen:
- DE-A1- 19 952 638
- JP-A- 9 170 636
- JP-A- 57 160 716
- JP-A- 59 031 360

## Beschreibung

Die vorliegende Erfindung betrifft ein pneumatisch dämpfendes Lager, insbesondere Motorlager für Kraftfahrzeuge, mit einer Tragfeder aus einem elastomeren Material, die einen Lagerkern abstützt und eine Arbeitskammer begrenzt, wobei die Arbeitskammer mit einem Gas, insbesondere Luft, gefüllt ist und über eine Düsenöffnung mit der Umgebung oder mit einer anderen Kammer verbunden ist.

Ein derartiges pneumatisch dämpfendes Lager ist aus der DE- A 10 2004 008 401 bekannt. Die Tragfeder weist eine breite, flache, Querschnittsform auf, um ein geringes Volumen der Arbeitskammer mit möglichst großem Pumpquerschnitt zu erzielen.

In der JP 57 160716 A ist ein pneumatisch dämpfendes Lager offenbart, das ein erstes elastisches Element und ein zweites elastisches Element aufweist. Das zweite elastische Element ist in einem topfförmigen Lagergehäuse aufgenommen. Des Weiteren steht das erste elastische Element mit dem zweiten elastischen Element in Kontakt und bildet eine Arbeitskammer. Die Arbeitskammer ist über eine Öffnung in dem Lagergehäuse mit einer Druckluftquelle verbunden und zudem wird das Lagergehäuse von einem Stopper umgeben. Hochfrequente Schwingungen werden durch die mit Luft gefüllte Arbeitkammer und das erste und zweite elastische Element gedämpft. Zur Dämpfung von Schwingungen mit niedriger Frequenz und großer Amplitude bewegt sich das Lagergehäuse in Richtung des Stoppers, bis das Lagergehäuse mit seinem Flansch gegen den Stopper anschlägt. Dadurch vergrößert sich das Volumen der Arbeitskammer, so dass der Luftdruck in den Arbeitskammern verringert wird.

In der JP 9 170636 A ist ein pneumatisch dämpfendes Lager offenbart, das eine Tragfeder aufweist, die zwischen zwei Platten angeordnet ist und eine Arbeitskammer bildet. Die Arbeitskammer wird von einer Trennwand in eine erste Arbeitskammer und eine zweite Arbeitskammer aufgeteilt. In der Trennwand befindet sich eine Durchströmöffnung, die die beiden Kammern miteinander verbindet. In der Tragfeder sind mehrere Öffnungen eingebracht, die mit der Umgebung verbunden sind. Von den Platten ragt jeweils ein konisch zulaufender Bolzen ab. Hochfrequente Schwingungen werden nur durch die Arbeitskammern gedämpft. Zur Dämpfung niederfrequenter Schwingungen mit großer Amplitude verschließen die Bolzen die Durchströmöffnung.

Aus der JP 59 031360 A geht ein pneumatisch dämpfendes Lager hervor, das eine Tragfeder umfasst, die eine Arbeitskammer bildet. An die Tragfeder schließt ein topfförmiges Gehäuse an, das über eine Öffnung verfügt und über eine Platte begrenzt wird. Zwischen der Öffnung und der Platte ist eine Feder eingebracht, die mit einem plattenförmigen Verschlussstopfen verbunden ist, der mit einer Öffnung versehen ist. Der Verschlussstopfen verschließt die Öffnung zur Arbeitskammer.

Aus der DE-A 199 52 638 ist ein Luftfederlager bekannt, dessen Arbeitskammer einerseits von der Tragfeder und andererseits von einer Dämpferplatte begrenzt wird. Auf der Dämpferplatte ist eine Schaumstoffschicht vollflächig aufgebracht und mit dieser verklebt. Die Schaumstoffschicht dient der Entkopplung von Störschwingungen mit kleinen Amplituden. In der Dämpferplatte ist ein Düsenkanal vorgesehen, der die Arbeitskammer mit der Umgebung verbindet.

Motorlager müssen eine Kraft-Weg-Kennlinie erfüllen, um unter bestimmten Lasten noch eine optimale Isolation zu erfüllen. Dies bedeutet, dass die Tragfeder eine große Verformung ermöglichen sollte. Diese Forderung erlaubt jedoch keinen optimalen Einsatz für die Luftdämpfung, da dann das Volumen zu groß wird.

Der Erfindung liegt die **Aufgabe** zugrunde, ein pneumatisch dämpfendes Lager vorzuschlagen, das die vorstehend beschriebenen Probleme vermeidet.

Diese Aufgabe wird durch die Merkmale des Anspruchs 1 **gelöst.**

Bei dem erfindergemäßen Lager wird die geforderte Kraft-Weg-Kennlinie durch die Tragfeder und das Progressionselement generiert. Arbeitet die Tragfeder um den Betriebspunkt wird die Arbeitskammer zwischen dem Progressionselement und der Tragfeder komprimiert. Da das Progressionselement aufgrund des verwendeten elastomeren Materiales ausreichend volumensteif ist, entsteht bei der Verdrängung von Luft über die in dem Progressionselement vorgesehene Düsenöffnung Dämpfung. Bei steigenden, quasistatischen Lasten verringert sich das Arbeitskammervolumen bis es vollständig geschlossen ist und die Unterseite der Tragfeder komplett an der Oberseite des Progressionselementes anliegt. Bei einer weiteren Beaufschlagung wird das Progressionselement elastisch verformt. Bei weiterer Lastzunahme steigt die quasi-statische Steifigkeit, bis schließlich der maximale Weg erreicht ist. Da das Progressionselement an einer der Arbeitskammer abgewandten Seite mindestens eine Luftkammer aufweist, wird eine erhöhte Nachgiebigkeit des Progressionselementes bei dessen Verformung erzielt. Die an dem Gehäuse im Bereich der Luftkammer eingebrachten Entlüftungsbohrungen ermöglichen ein Entweichen der verdrängten Luft.

Vorteilhafte Ausgestaltungen sind Gegenstand der Unteransprüche.

Dabei kann die Luftkammer vorteilhaft rillenförmige Ausnehmungen aufweisen, die in das Progressionselement eingeformt sind. Die rillenförmigen Ausnehmungen können beispielsweise rotationssymmetrisch ausgebildet sein.

Vorteilhaft ist die Luftkammer über eine Düsenöffnung mit der Arbeitskammer verbunden. Die Düsenöffnung wirkt als Überdruckventil bei hohen Über- und Unterdrücken.

Bei einer vorteilhaften Ausführungsform ist das Progressionselement als einteiliges Vulkanisationsteil ausgebildet.

Vorteilhafterweise kann die Düsenöffnung in dem Befestigungsbereich eingebracht sein.

Bei einer anderen Ausführungsform ist das Progressionselement in dem Gehäuse einvulkanisiert oder eingeklebt.

Nachfolgend werden Ausführungsformen näher erläutert, die in den Zeichnungen in schematischer Weise dargestellt sind. Hierbei zeigen:
Fig. 1 einen Vertikalschnitt durch eine erste Ausführungsform eines Lagers;
Fig. 2 einen Vertikalschnitt durch eine zweite Ausführungsform eines Lagers;
Fig. 3 einen Vertikalschnitt durch eine dritte Ausführungsform eines Lagers;
Fig. 4 einen Vertikalschnitt durch eine vierte Ausführungsform eines Lagers und
Fig. 5 eine Kraft-Weg-Kennlinie eines erfindungsgemäßen Lagers und der nicht erfindungsgemäßen Ausführungsformen gemäß den Fig. 1 bis 4.

Die nachfolgenden Ausführungen beziehen sich auf nicht erfindungsgemäße Ausführungsformen, wobei ein erfindungsgemäßes Lager gleiche oder funktionsgleiche Teile verwendet.

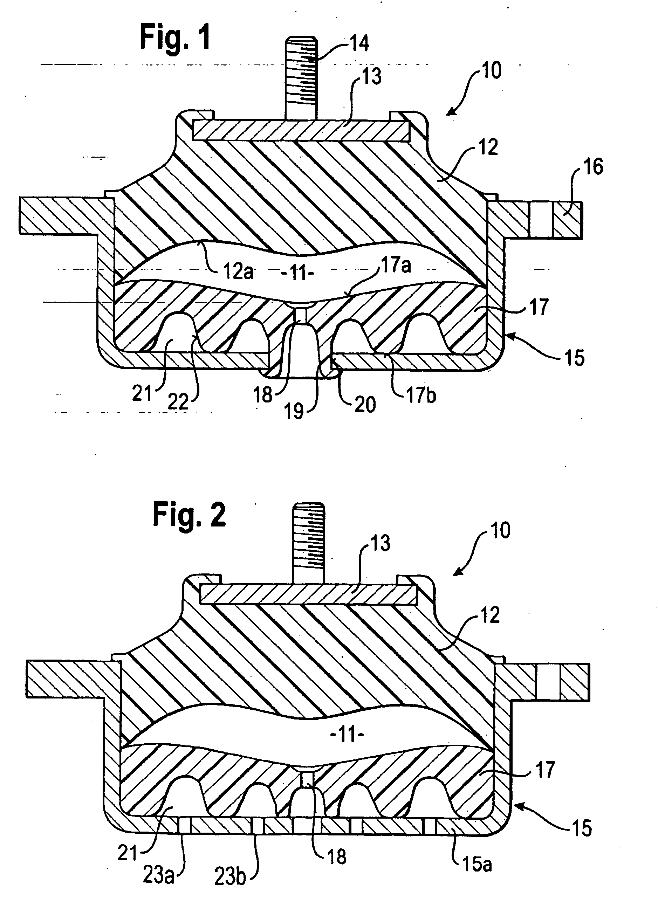

Das in Fig. 1 dargestellte pneumatisch dämpfende Lager 10 wird zur Lagerung eines nicht dargestellten Motors eines Kraftfahrzeuges eingesetzt. Das Lager 10 weist eine Tragfeder 12 aus einem elastomeren Material, insbesondere Gummi, auf. In die Tragfeder 12 ist ein Lagerkern 13 einvulkanisiert, der einen vertikal abragenden Bolzen 14 zur Festlegung an dem Motor aufweist.

Die Tragfeder 12 stützt sich an ihrem Außenumfang an einen topfförmigen Gehäuse 15 ab, das zur Festlegung an der Fahrzeugkarosserie einen radial abragenden Flansch 16 aufweist. Das Gehäuse 15, das vorliegend rotationssymmetrisch ausgebildet ist, jedoch prinzipiell auch eine andere Querschnittsform aufweisen kann, weist mittig eine Öffnung 20 auf. In dem Gehäuse 20 ist ein Progressionselement 17 aus einem elastomeren Material aufgenommen, das einen Befestigungsflansch 19 aufweist. Zur Festlegung des Progressionselementes 17 ist an diesem ein Befestigungsflansch 19 vorgesehen, der in die Gehäuseöffnung 20 eingeknüpft ist.

Das Progressionselement 17 weist eine Oberseite 17a auf, die mit der beabstandet hierzu angeordneten Innenseite 12a der Tragfeder 12 eine Arbeitskammer 11 begrenzt. Die mit Luft gefüllte Arbeitskammer 11 ist über eine Düsenöffnung 18, die den Befestigungsflansch 19 durchdringt, mit der Umgebung verbunden.

Das Progressionselement 17 weist an seiner der Arbeitskammer 11 abgewandten Unterseite 17b eine Luftkammer 21 auf, die durch rillenförmige Ausnehmungen 22 gebildet wird. Durch die Luftkammer 21 wird die Nachgiebigkeit des Progressionselementes 17 bei einer Druckbeaufschlagung erhöht.

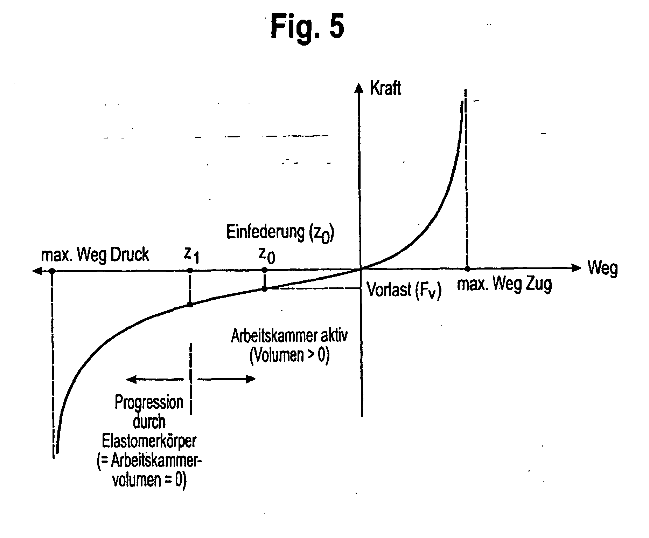

Nachfolgend soll die Funktionsweise des Lagers 10 unter Bezugnahme auf die in Fig. 5 dargestellte Kraft-Weg-Kennlinie beschrieben werden. Die nachfolgend beschriebene Funktionsweise ist auch auf das erfindungsgemäße Lager übertragbar. Aufgrund der statischen Vortast, die durch die Tragfeder 12 abgestützt wird, kommt es zu einer Einfederung z₀ der Tragfeder 12. Arbeitet die Tragfeder 12 um den Betriebspunkt wird die Arbeitskammer 11 zwischen dem Progressionselement 17 und der Tragfeder 12 komprimiert. Da das Progressionselement 17 aufgrund des verwendeten elastomeren Materials ausreichend volumensteif ist, tritt ein Dämpfungseffekt durch die über die Düsenöffnung 18 verdrängte Luft auf. Bei steigenden Lasten in Druckrichtung verringert sich das Volumen der Arbeitskammer 11 bis es vollständig geschlossen ist und die Unterseite 12a der Tragfeder 12 an der Oberseite 17a des Progressionselementes 17 anliegt. In der Kraft-Weg-Kennlinie ist diese Einfederung mit z₁ bezeichnet. Bei weiterer Druckbeaufschlagung wird das Progressionselement 17 komprimiert, wobei die quasi-statische Steifigkeit aufgrund der Luftkammer 21 ansteigt bis schließlich der maximale Weg erreicht ist. Somit erlaubt das Progressionselement 17 nach Verschließen der Arbeitskammer 11 eine weitere Verformung des Lagers.

In den Fig. 2 bis 4 sind weitere Ausführungsformen dargestellt, zu deren Beschreibung die bereits eingeführten Bezugszeichen für gleiche oder funktionsgleiche Teile verwendet werden.

Das in Fig. 2 dargestellte pneumatisch dämpfende Lager 10 weist ein Progressionselement 17 auf, das in dem Gehäuse 15 aufgenommen ist. Das Progressionselement 17 ist an dem Gehäuse 15 durch Verklebung festgelegt. An dem Boden 15a des Gehäuses 15 sind mehrere Öffnungen 23a, 23b vorgesehen, die die Luftkammer 21 des Progressionselementes 17 mit der Umgebung verbinden. Hierdurch wird eine besonders hohe Nachgiebigkeit des Progressionselementes 17 erzielt.

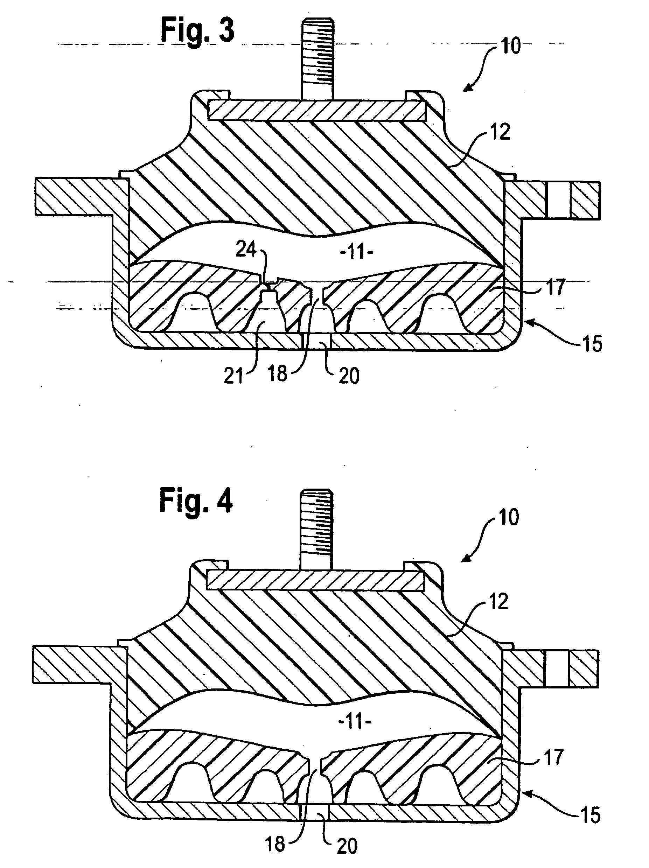

Bei dem in Fig. 3 dargestellten Lager 10 weist das Progressionselement 17 eine Luftkammer 21 auf, die über eine Düsenöffnung 24 mit der Arbeitskammer 11 verbunden ist. Die Düsenöffnung 24 wirkt als Überdruckventil bei hohen Über- oder Unterdrücken.

Fig. 4 zeigt eine weitere Ausführungsform, bei der das Progressionselement 17 eine zentrale Düsenöffnung 18 aufweist, die mit der Gehäuseöffnung 20 kommuniziert. Hierbei ist die Düsenöffnung als geschlitzte Membran ausgeführt.

Sämtliche vorstehend beschriebenen Ausführungsformen der nicht erfindungsgemäßen Lager und das erfindungsgemäße Lager zeichnen sich dadurch aus, dass durch den Einsatz des Progressionselementes 17 nach Verschließen der Arbeitskammer 11 eine weitere Verformung des Lagers 10 erlaubt wird. Hierbei steigt bei weiterer Lastzunahme die quasi-statische Steifigkeit an, bis schließlich der maximale Weg erreicht ist.

## Patentansprüche

1. Pneumatisch dämpfendes Lager (10), insbesondere Motorlager für Kraftfahrzeuge, mit einer Tragfeder (12) aus einem elastomeren Material, die einen Lagerkern (13) abstützt und eine Arbeitskammer (11) begrenzt, wobei die Arbeitskammer (11) mit einem Gas, insbesondere Luft gefüllt ist und über eine Düsenöffnung (18) mit der Umgebung oder mit einer anderen Kammer verbunden ist, wobei ein Progressionselement (17) aus einem elastomeren Material vorgesehen ist, das der Tragfeder (12) gegenüberliegend angeordnet ist und mit dieser die Arbeitskammer (11) begrenzt, wobei die Tragfeder (12) und das Progressionselement (17) in einem topfförmigen Gehäuse (15) aufgenommen sind, **dadurch gekennzeichnet, dass** das Progressionselement (17) an einer der Arbeitskammer abgewandten Unterseite (17b) mit dem Gehäuse (15) eine Luftkammer (21) begrenzt, dass das Progressionselement (17) einen angeformten Befestigungsflansch (19) zum Einknüpfen an dem Gehäuse (15) aufweist, dass an dem Gehäuse (15) im Bereich der Luftkammer (21) Entlüftungsbohrungen (23a, 23b) eingebracht sind und dass die Düsenöffnung (18) in dem Progressionselement (17) eingebracht ist.

2. Lager nach Anspruch 1, **dadurch gekennzeichnet, dass** die Luftkammer (21) rillenförmige Ausnehmungen (22) aufweist, die in das Progressionselement (17) eingeformt sind.

3. Lager nach einem der vorhergehenden Ansprüche, **dadurch gekennzeichnet, dass** die Luftkammer (21) über eine Düsenöffnung (24) mit der Arbeitskammer (11) verbunden ist.

4. Lager nach einem der vorhergehenden Ansprüche, **dadurch gekennzeichnet, dass** das Progressionselement (17) als einteiliges Vulkanisationsteil ausgebildet ist.

5. Lager nach einem der vorhergehenden Ansprüche, **dadurch gekennzeichnet, dass** die Düsenöffnung (18) in dem Befestigungsflansch (19) eingebracht ist.

6. Lager nach einem der vorhergehenden Ansprüche, **dadurch gekennzeichnet, dass** das Progressionselement (17) in dem Gehäuse (15) einvulkanisiert oder eingeklebt ist.

## Claims

1. A pneumatically damping mount (10), in particular an engine mount for motor vehicles, comprising a bearing spring (12) of an elastomeric material supporting a mount core (13) and delimiting a working chamber (11), wherein the working chamber (11) is filled with a gas, in particular air, and communicates with the ambience or another chamber via a nozzle opening (18), wherein a progression element (17) made of an elastomeric material and arranged opposite to the bearing spring (12) and delimiting the working chamber (11) in conjunction with the bearing spring (12), is provided, wherein the bearing spring (12) and the progression element (17) are accommodated in a cup-shaped housing (15), **characterized in that** the progression element (17) delimits in conjunction with the housing (15) an air chamber (21) at a lower side (17b) facing away from the working chamber, **in that** the progression element (17) includes an integrally formed mounting flange (19) for snap-fastening at the housing (15), **in that** venting bores (23a, 23b) are provided at the housing (15) in the area of the air chamber (21), and **in that** the nozzle opening (18) is provided in the progression element (17).

2. The mount according to claim 1, **characterized in that** the air chamber (21) has groove-like recesses (22) formed into the progression element (17).

3. The mount according to any one of the preceding claims, **characterized in that** the air chamber (21) is in communication with the working chamber (11) via a nozzle opening (24).

4. The mount according to any one of the preceding claims, **characterized in that** the progression element (17) is formed as a one-piece vulcanized part.

5. The mount according to any one of the preceding claims, **characterized in that** the nozzle opening (18) is provided in the mounting flange (19).

6. The mount according to any one of the preceding claims, **characterized in that** the progression element (17) is vulcanized or bonded into the housing (15).

## Revendications

1. Support à amortissement pneumatique (10), en particulier support de moteur pour véhicules automobiles, comprenant un ressort porteur (12) en un matériau élastomère, qui soutient une âme de support (13) et qui délimite une chambre de travail (11), dans lequel la chambre de travail (11) est remplie avec un gaz, en particulier de l'air, et est reliée via une ouverture formant buse (18) avec l'environnement ou avec une autre chambre, dans lequel il est prévu un élément de progression (17) en un matériau élastomère, qui est agencé à l'opposé du ressort porteur (12) et qui délimite avec celui-ci la chambre de travail (11), dans lequel le ressort porteur (12) et l'élément de progression (17) sont reçus dans un boîtier en forme de godet (15), **caractérisé en ce que,** au niveau d'une face inférieure (17b) détournée de la chambre de travail, l'élément de progression (17) délimite avec le boîtier (15) une chambre à air (21), **en ce que** l'élément de progression (17) comprend une bride de fixation conformée (19) destinée à être coiffée sur le boîtier (15), **en ce que** des perçages d'évacuation d'air (23a, 23b) sont ménagés dans le boîtier (15) dans la région de la chambre à air (21), et **en ce que** l'ouverture formant buse (18) est ménagée dans l'élément de progression (17).

2. Support selon la revendication 1, **caractérisé en ce que** la chambre à air (21) comporte d'évidement (22) en forme de rainures, qui sont formés dans l'élément de progression (17).

3. Support selon l'une des revendications précédentes, **caractérisé en ce que** la chambre à air (21) est reliée avec la chambre de travail (11) via une ouverture formant buse (24).

4. Support selon l'une des revendications précédentes, **caractérisé en ce que** l'élément de progression (17) est réalisé sous forme d'une pièce vulcanisée d'un seul tenant.

5. Support selon l'une des revendications précédentes, **caractérisé en ce que** l'ouverture formant buse (18) est ménagée dans la bride de fixation (19).

6. Support selon l'une des revendications précédentes, **caractérisé en ce que** l'élément de progression (17) est intégré dans le boîtier (15) par vulcanisation ou par collage.
